# EUROPÄISCHE PATENTSCHRIFT

(11) **EP 3 615 957 B1**
(45) Veröffentlichungstag und Bekanntmachung des Hinweises auf die Patenterteilung: **08.06.2022**
(21) Anmeldenummer: 18718823.0
(22) Anmeldetag: 20.04.2018
(51) Int. Cl.: G01S 13/87, G01S 13/931

(54) **VERFAHREN ZUM BETRIEB EINES RADARSENSORS IN EINEM KRAFTFAHRZEUG, RADARSENSOR UND KRAFTFAHRZEUG**
METHOD FOR OPERATING A RADAR SENSOR IN A MOTOR VEHICLE, RADAR SENSOR, AND MOTOR VEHICLE
PROCÉDÉ SERVANT À FAIRE FONCTIONNER UN CAPTEUR RADAR DANS UN VÉHICULE AUTOMOBILE, CAPTEUR RADAR ET VÉHICULE AUTOMOBILE

(30) Priorität: 25.04.2017 DE 102017206944
(43) Veröffentlichungstag der Anmeldung: 04.03.2020
(73) Patentinhaber: Audi AG, 85045 Ingolstadt (DE)
(72) Erfinder: KOCH, Niels, 85084 Reichertshofen (DE)
(74) Vertreter: Herbst, Matthias Heinz
(86) Internationale Anmeldenummer: PCT/EP2018/060133
(87) Internationale Veröffentlichungsnummer: WO 2018/197346

(56) Entgegenhaltungen:
- WO-A1-2017/054962
- DE-A1-102004 046 634
- US-A1- 2011 285 573
- US-A1- 2015 042 507

## Beschreibung

Die Erfindung betrifft ein Verfahren zum Betrieb eines Radarsensors in einem Kraftfahrzeug, wobei der Radarsensor wenigstens eine Antennenanordnung zum Aussenden und Empfangen von Radarsignalen und eine Verarbeitungseinrichtung zum Auswerten empfangener Radarsignale aufweist, einen Radarsensor und ein Kraftfahrzeug.

Radarsensoren spielen in modernen Kraftfahrzeugen eine große Rolle, was die Umgebungserfassung angeht. Eine Vielzahl von vorgeschlagenen und auch tatsächlich realisierten Fahrerassistenzsystemen und/oder Sicherheitssystemen nutzen Radarsensoren, um Informationen über die Umgebung des Kraftfahrzeugs zu erhalten. Ein prominentes Beispiel für derartige Fahrerassistenzsysteme sind die Längsführung wenigstens teilweise automatisierende Längsführungssysteme, beispielsweise ACC-Systeme. Das Grundprinzip von Radarsensoren ist das Aussenden elektromagnetischer Wellen, der Radarsignale, welche an einem Objekt reflektiert und wieder empfangen werden. Die empfangenen Radarsignale können dann insbesondere hinsichtlich eines Abstands des Objekts, einer Richtung und einer Relativgeschwindigkeit ausgewertet werden.

Im Rahmen der Auswertung empfangener Radarsignale findet unter anderem auch eine schnelle Fourier-Transformation statt, die ein empfangenes Frequenzspektrum wieder auf Laufzeiten umrechnet und bezüglich einer zeitlichen Rasterung und somit der Entfernungsrasterung schnell im Aufwand ansteigt. Die Anzahl der Stützstellen, die im verwendeten Frequenzbereich (Frequenzband) verwendet werden, bestimmt aber die Entfernungsauflösung. Hinsichtlich der Entfernungsauflösung und der Reichweite sind unterschiedliche Betriebsmodi von Radarsensoren bereits vorgeschlagen worden.

Wird ein Radarsensor zur Fernbereichsdetektion eingesetzt, wird üblicherweise eine eher geringe Frequenzbandbreite eingesetzt, beispielsweise bei den bekannten 76-GHz-Radarsensoren, die Chirps verwenden, von 250 MHz. Werden beispielsweise 512 Stützstellen im Rahmen der schnellen Fourier-Transformation (FFT) verwendet, wird eine Reichweite von 84 m abgedeckt, wobei jedes Entfernungsrasterelement ca. 30 cm groß ist. Diese Rastergröße wird auch Entfernungsauflösung genannt. Bei einer genaueren Erfassung auf kürzere Reichweite, also in einem Nahbereich-Betriebsmodus des Radarsensors, wird eine höhere Frequenzbandbreite verwendet, beispielsweise eine doppelt so hohe Frequenzbandbreite, bezüglich des oben genannten Beispiels mithin 500 MHz. Bei gleicher FFT-Stützstellenanzahl reduziert sich die Rastergröße auf 15 cm, so dass die Entfernungsauflösung erhöht ist, was aber zum Nachteil der nun maximal auswertbaren Reichweite geschieht, denn diese liegt nun nur noch bei 42 m.

Für sehr feine Entfernungsauflösungen, wie sie beispielsweise bei Parkvorgängen oder dergleichen eingesetzt werden sollen, mithin Rastergrößen im Bereich von ca. 3 - 5 cm, liegt bei gleicher FFT-Stützstellenanzahl die maximal auswertbare Entfernung bei nur noch 10 - 15 m. Ein derartiger Betriebsmodus eines Radarsensors kann auch als Park-Betriebsmodus bezeichnet werden.

Während ein Park-Betriebsmodus eines Radarsensors zweckmäßigerweise nur für Parkvorgänge aktiviert wird, ist die Entscheidung für einen Betriebsmodus hinsichtlich des Nahbereichs-Betriebsmodus ("short look") und des Fernbereichs-Betriebsmodus ("long look") schwieriger. Einerseits sollen herannahende Objekte frühzeitig, das heißt mit hohen Reichweiten, erkannt werden, andererseits sind nähere Objekte, insbesondere also Verkehrsteilnehmer, deutlich dichter am Kraftfahrzeug befindlich und äußerst relevant für den Betrieb des eigenen Kraftfahrzeugs, so dass gewünscht wird, diese mit genügend hoher Entfernungsauflösung zu erfassen und nachzuverfolgen (Tracking).

Daher wurde für Radarsensoren in Kraftfahrzeugen bereits vorgeschlagen, ein regelmäßiges Umschalten zwischen beiden Betriebsmodi, also dem Nahbereichs-Betriebsmodus und dem Fernbereichs-Betriebsmodus, vorzunehmen ("interleaving"). Beispielsweise kann zwischen dem Fernbereichs-Betriebsmodus und dem Nahbereichs-Betriebsmodus im Verhältnis 1:1 oder 1:2 umgeschaltet werden, wobei das Verhältnis beispielsweise abhängig von der Geschwindigkeit des Kraftfahrzeugs gewählt werden kann. Dabei gilt jedoch, dass dann, wenn sich der Radarsensor im Nahbereichs-Betriebsmodus befindet, ein großer Reichweitenbereich nicht von der Erfassung abgedeckt wird, sondern hier die Erfassung erst wenigstens einen Zyklus später erfolgt, so dass bei einer typischen Dauer eines Zeitfensters von 40 ms bis 50 ms als die Aktualisierungsrate definierend nur alle ca. 100 ms im entfernten Reichweitenbereich erfasst wird. Sehr schnell herannahende Kraftfahrzeuge bzw. sonstige Objekte werden damit erst sehr spät erkannt, was unerwünscht ist.

DE 10 2006 049 879 A1 betrifft ein Radarsystem für Kraftfahrzeuge, wobei mehrere Radarsensoren zur Überwachung des Vorfelds des Fahrzeugs eingesetzt werden sollen, von denen mindestens zwei LRR-Sensoren, also Long Range Radar-Sensoren, sein sollen. Dabei wird vorgeschlagen, in einer Ausführungsform die Sensoren abwechselnd mit unterschiedlichen Frequenzmodulationen zu betreiben, wobei in jedem Zyklus die Modulation eines Sensors für den Nahbereich optimiert sein soll, während sie bei dem anderen Sensor für den Fernbereich optimiert ist. Auf diese Weise erhält man sowohl für den linken als auch für den rechten Sensor in jedem zweiten Zyklus ein Signal mit guter Abstandsauflösung, während zugleich durch Fusion der Daten der beiden Sensoren eine optimale Fernbereichsortung in jedem Zyklus möglich sein soll.

Hierbei werden mithin zwei Radarsensoren benötigt, die jeweils zeitversetzt aussenden, so dass eine Aufwands- und Verarbeitungszeiterhöhung resultiert.

Der Erfindung liegt daher die Aufgabe zugrunde, auf möglichst aufwandsarme Weise die Latenzzeit, bis Nahbereichs- und Fernbereichsdaten vorliegen, zu reduzieren.

Zur Lösung dieser Aufgabe ist bei einem Verfahren der eingangs genannten Art erfindungsgemäß vorgesehen, dass die Antennenanordnung zum gleichzeitigen Aussenden und Empfangen von Radarsignalen sowohl in einem Fern-Frequenzbereich als auch in einem Nah-Frequenzbereich, wobei die Bandbreite des Nah-Frequenzbereichs größer ist als die des Fern-Frequenzbereichs, angesteuert wird, wonach empfangene Radarsignale des Nah-Frequenzbereichs zu Radardaten einer höheren Entfernungsauflösung und empfangene Radarsignale des Fern-Frequenzbereichs zu Radardaten einer niedrigen Entfernungsauflösung ausgewertet werden.

Der Erfindung liegt die Idee zugrunde, einen Nahbereichs-Betriebsmodus und einen Fernbereichs-Betriebsmodus nicht länger durch Nutzung unterschiedlicher Zeitfenster zu separieren, sondern die Messung zeitgleich, also zumindest in einem gemeinsamen Aussendezeitfenster und Empfangszeitfenster, auszuführen, indem eine Frequenzbereich-Separierung stattfindet. Mit anderen Worten werden Radarsignale in einem gemeinsamen Aussendezeitfenster sowohl im Fern-Frequenzbereich als auch im Nah-Frequenzbereich zeitgleich ausgesendet. Während eines folgenden Empfangszeitfensters werden die reflektierten Radarsignale beider Frequenzbereiche ebenso zeitgleich empfangen. Durch diese zeitliche Parallelisierung und zugleich Isolation der Radarsignale über die Frequenz wird eine latenzreduzierte Erfassung in beiden Reichweitenbereichen und beiden Entfernungsauflösungen ermöglicht.

Die bislang zeitlich abwechselnd ("interleaved") ausgeführten Betriebsmodi werden nun zeitgleich durchgeführt, so dass zur gleichen Zeit die Ferne und die Nähe erfasst werden, wobei bei überlappenden Erfassungsbereichen der Nahbereich redundant erfasst wird, nämlich einmal mit der groben Rasterung der niedrigeren Entfernungsauflösung ("long look") und einmal mit der feineren Rasterung durch die höhere Entfernungsauflösung ("short look"). Während sich erfasste Objekte bei einer zeitlichen Trennung dieser Erfassungsvorgänge bewegen konnten und somit diese Bewegung nur grob und mit zeitlich doppelter Dauer erfasst werden konnte, ermöglicht es die Erfindung mithin, Bewegungen stetiger und feiner zu erfassen.

Insgesamt kommt es also zur zeitgleichen Erfassung des gesamten Reichweitenbereichs in beiden Entfernungsauflösungen, womit die Latenz reduziert, bei gleichzeitiger Auswertung, wie im Folgenden noch näher diskutiert, sogar gänzlich eliminiert werden kann. Doch selbst bei sequentieller Auswertung in den beiden Frequenzbereichen ist eine Reduzierung der Latenz möglich, wobei Untersuchungen gezeigt haben, dass die Reduzierung hier im Bereich von 60 bis 75 % liegt. Vorteile entstehen durch die reduzierte Latenzzeit insbesondere beim Nachverfolgen von Objekten, nachdem kein Sprung in den Abtastzeitpunkten mehr vorliegt, was die Stabilität von Kalman-Filtern bei Nachverfolgungsalgorithmen erhöht. Objekte können mithin besser verfolgt werden.

Dabei kann vorgesehen sein, dass bei der Auswertung der empfangenen Radarsignale beider Frequenzbereiche dieselbe Anzahl von Stützstellen bei einer schnellen Fourier-Transformation verwendet wird und/oder die Bandbreite des Nah-Frequenzbereichs wenigstens das doppelte der Bandbreite des Fern-Frequenzbereichs beträgt. Beispielsweise können 512 Stützstellen angesetzt werden; als Bandbreiten bieten sich für den Nah-Frequenzbereich 500 MHz und den Fern-Frequenzbereich respektive 250 MHz an.

In einer besonders bevorzugten Ausgestaltung der vorliegenden Erfindung kann vorgesehen sein, dass bei einem zumindest teilweise überlappenden räumlichen Erfassungsbereich für die Frequenzbereiche eine gemeinsame Auswertung empfangener Radarsignale für einen den Nah-Frequenzbereich und den Fern-Frequenzbereich vollständig umfassenden, zusammenhängenden Gesamt-Frequenzbereich erfolgt. Der Gesamt-Frequenzbereich beginnt somit mit der niedrigsten Rand-Frequenz der beiden Frequenzbereiche und endet mit der höchsten Rand-Frequenz der beiden Frequenzbereiche. Auf diese Weise wird ein überraschender Nebeneffekt dieser Methodik genutzt, der die Objekterfassungsgenauigkeit im Nahbereich erhöht. Nicht nur die Erfassung eines Objekts mit unterschiedlichen Auflösungsrasterungen trägt zur Erkennungsverbesserung bei, beispielsweise durch gegenseitige Plausibilisierung, sondern ein Objekt in der Nähe wird zudem mit einer nochmals erhöhten Bandbreite abgetastet, falls die Erfassungsbereiche geeignet überlappen und nicht der Fern-Frequenzbereich vollständig innerhalb des Nah-Frequenzbereichs liegt.

Im zuletzt genannten Sonderfall kann in einer zweckmäßigen Weiterbildung vorgesehen sein, dass bei einem zumindest bezüglich des Öffnungswinkels vollständig in dem räumlichen Erfassungsbereich des Nah-Frequenzbereichs enthaltenen räumlichen Erfassungsbereich des Fern-Frequenzbereichs der Fern-Frequenzbereich vollständig von dem den Gesamt-Frequenzbereich bildenden Nah-Frequenzbereich umfassend ist. In dieser Ausgestaltung ist der Gesamt-Frequenzbereich mithin der Nah-Frequenzbereich, so dass die Auswertung im Gesamt-Frequenzbereich der Auswertung im Nah-Frequenzbereich entspricht. Auf diese Weise ist vorteilhaft weiterhin nur eine Bandbreite der ausgesendeten Signale erforderlich, die für die hinreichende Entfernungsauflösung im Nahbereich ausreichend ist, so dass diesbezüglich keine Modifikationen erfolgen müssen. Der Fern-Frequenzbereich wird bezüglich der empfangenen Signale aus dem Nah-Frequenzbereich einfach ausgeschnitten und der entsprechenden Auswertung zugeführt.

Alternativ ist der Gesamt-Frequenzbereich jedoch größer als der Nah-Frequenzbereich, wobei bevorzugt der Nah-Frequenzbereich und der Fern-Frequenzbereich, bis auf gegebenenfalls eine Berührungsfrequenz, getrennt, mithin elementfremd, sind, so dass sich bei einander unmittelbar anschließenden Frequenzbereichen additiv der Gesamt-Frequenzbereich ergibt. Legt man mithin die Frequenzseparation so, dass beispielsweise der Fern-Frequenzbereich endet, wo der Nah-Frequenzbereich beginnt, entsteht bei 500 MHz Erfassungsbandbreite des Nah-Frequenzbereichs und 250 MHz Erfassungsbandbreite des Fern-Frequenzbereichs eine Gesamterfassungsbandbreite von 750 MHz. Bei gleicher FFT-Stützstellenanzahl, beispielsweise von 512 Stützstellen wäre es mithin möglich, die Entfernungsrasterung deutlich zu reduzieren, beispielsweise auf unter 3 cm, was die Auswertung des Gesamt-Frequenzbereichs angeht.

Eine vorteilhafte Weiterbildung in diesem Zusammenhang sieht vor, dass bei einem nicht durch Radarsignale abgedeckten Auslass-Frequenzbereich zwischen dem Nah-Frequenzbereich und dem Fern-Frequenzbereich dortige Signalpegel für die Auswertung auf Null gesetzt werden oder eine Interpolation im Auslass-Frequenzbereich erfolgt. Wird ein bestimmter Frequenzbereich ausgelassen, hier der Auslass-Frequenzbereich, ist dennoch eine Auswertung im Gesamt-Frequenzbereich möglich, die die Bandbreite des Gesamt-Frequenzbereichs betrifft und somit hervorragende Entfernungsauflösungen in einem Ultranahbereich ermöglicht. Hat der Auslass-Frequenzbereich im oben genannten Beispiel eine Frequenzbandbreite von 250 MHz, entsteht eine Frequenzbandbreite des Gesamt-Frequenzbereichs von 1000 MHz = 1 GHz, wobei vorteilhafterweise nicht die gesamte Frequenzbandbreite des Gesamt-Frequenzbereichs auch belegt sein muss. Denn die Signalpegel im Auslass-Frequenzbereich können einfach auf Null gesetzt werden, wie es schließlich auch der Fall wäre, wenn in diesem Bereich eine Dämpfung auftreten würde, oder es kann eine Interpolation zwischen dem Nah-Frequenzbereich und dem Fern-Frequenzbereich erfolgen. Denkbar ist es also beispielsweise, die Auflösung für den Gesamt-Frequenzbereich zu steigern, indem der Fern-Frequenzbereich am untersten Ende des Gesamt-Frequenzbereichs beginnt und der Nah-Frequenzbereich am obersten Ende des Gesamt-Frequenzbereichs endet, wobei im Auslassbereich interpoliert wird oder auf Null gesetzt wird. Die Möglichkeit zum Schließen der Bandbreitenlücke ergibt sich bereits daraus, dass sich die meisten Objekte, die in Praxis vorkommen, linear bewegen und verhalten, so dass es insgesamt zu einer Quasi-Auflösungsverbesserung im Ultranahbereich kommt, ohne dass dabei die Reichweiten eingeschränkt werden müssen.

Eine zweckmäßige Ausgestaltung der Erfindung kann vorsehen, dass die Radarsignale des Nah-Frequenzbereichs und die Radarsignale des Fern-Frequenzbereichs in unterschiedliche Richtungen ausgesendet werden. So kann beispielsweise mittels eines einzigen Radarsensors nach vorne und zur Seite oder sogar zu entgegengesetzten Seiten, bei entsprechend vorhandenen Antennenanordnungen, erfasst werden, ohne dass diesbezüglich mit zu starken Latenzeinbußen gerechnet werden muss. Es ist also möglich, mit dem Radarsensor unterschiedliche Richtungen abzutasten, ohne dabei Latenz aufzubauen. Beispielsweise wurden bereits Radarsensoren vorgeschlagen, die in einem Fernbereichs-Betriebsmodus in einer Längsrichtung des Kraftfahrzeugs gerichtet senden und in einem Nahbereichs-Betriebsmodus mit verbreitertem Sichtbereich zur Seite des Kraftfahrzeugs ausgerichtet messen. Während nun mit solchen Radarsensoren des Standes der Technik im Fernbereich-Betriebsmodus in Längsrichtung des Kraftfahrzeugs erfasst wurde, konnten keine Objekte an der Seite erkannt werden und umgekehrt. Wurde ein wechselnder Betrieb in den beiden Betriebsmodi angesetzt, war trotz der Aktualisierungsrate von 50 ms effektiv für den Fernbereich und den Nahbereich eine Aktualisierungsrate von 100 ms gegeben. Wird nun erfindungsgemäß eine Parallelisierung des Aussendens und auch des Empfangs der Radarsignale für mehrere Richtungen erlaubt, wobei eine Unterscheidung bei frequenzmäßiger Entkopplung leicht ermöglicht wird, ist auch für solche Fälle eine deutliche Latenzreduktion gegeben und aktuelle Messdaten stehen häufiger zur Verfügung.

Wie bereits dargelegt wurde, ist es grundsätzlich denkbar, die empfangenen Radarsignale des Nah-Frequenzbereichs und des Fern-Frequenzbereichs sequentiell, insbesondere unter Nutzung derselben Auswertungseinheit/Verarbeitungseinheit, auszuwerten. Dann liegt zwar eine erhöhte Bearbeitungszeit vor, in der Praxis ist jedoch dennoch eine Latenzreduzierung gegeben, beispielsweise, wie oben bereits erwähnt, im Bereich von 60 bis 75 %.

Nichtsdestotrotz sieht eine bevorzugte Ausgestaltung der vorliegenden Erfindung vor, dass die Auswertung der empfangenen Radarsignale im Fern-Frequenzbereich und im Nah-Frequenzbereich zeitlich parallel erfolgt. Dann kann ein optimaler Betrieb des Radarsensors dadurch realisiert werden, dass immer die zuletzt empfangenen Radarsignale während einer aktuellen Sende- und Messphase ausgewertet werden. Beispielsweise kann ein Sende- und Empfangsblock einer Dauer von 50 ms zeitlich parallel zu einem Auswertungsblock von 50 ms für die zuletzt empfangenen Radarsignale ausgeführt werden, so dass alle 50 ms neue, aktuelle Radardaten durch Auswertung ermittelt werden. Dabei ist es in diesem Kontext besonders bevorzugt, wenn ein wenigstens zwei jeweils einem Frequenzbereich zugeordnete Verarbeitungseinheiten, insbesondere digitale Signalprozessoren, der Verarbeitungseinrichtung aufweisender Radarsensor verwendet wird. Verarbeitungseinheiten können, insbesondere bei Mehrkernprozessoren, abstrakt definiert werden, beispielsweise als mehrere Kerne eines solchen Mehrkern-Prozessors, bevorzugt kann jedoch der Radarsensor beispielsweise mit einem weiteren digitalen Signalprozessor (DSP) versehen werden, um auf unabhängigen Prozessoren die Auswertung der empfangenen Radarsignale für die unterschiedlichen Frequenzbereiche, also zumindest den Nah-Frequenzbereich und den Fern-Frequenzbereich, vorzunehmen. In Ausführungsbeispielen kann es auch denkbar sein, zusätzlich eine Verarbeitungseinheit für eine Auswertung im Gesamt-Frequenzbereich vorzusehen, wenn dieser nicht ohnehin dem Nah-Frequenzbereich entspricht. Durch die Verwendung getrennter Verarbeitungseinheiten können der "short look" und der "long look" latenzfrei parallel verarbeitet werden. Die Auswertungsergebnisse beider zeitgleich genutzter Betriebsmodi liegen auch zeitgleich zur Weiterverarbeitung vor.

Insbesondere ist es möglich, bei einer parallelen Auswertung auch eine latenzfreie Fusion der Auswertungsergebnisse für den Nah-Frequenzbereich und den Fern-Frequenzbereich vorzunehmen, insbesondere um Objektwahrscheinlichkeiten durch gegenseitige Plausibilisierung zu verbessern und/oder eine Nachverfolgung aufgrund der jeweiligen Ergebnisse vorzunehmen. Bei der Nachverfolgung der Objekte liegt kein Sprung in den Abtastzeitpunkten vor, was der verlässlichen Funktionsweise von Kalman-Filtern zuträglich ist.

In einer alternativen Ausgestaltung ist es, wenn auch weniger bevorzugt, denkbar, dass die Auswertung für die Frequenzbereiche sequentiell erfolgt, wobei die empfangenen Radarsignale des später auszuwertenden Frequenzbereichs durch Verzögerung der Signalverarbeitung, insbesondere in einem Analog-Digital-Wandler, bis zum Auswertungsbeginn zurückgehalten werden. Soll also keine wenigstens eine zweite Verarbeitungseinheit verwendet werden, können beispielsweise zuerst die empfangenen Radarsignale des Fern-Frequenzbereichs ausgewertet werden, wobei die Auswertungsergebnisse zwischengespeichert werden können, um dann die Auswertung im anderen Frequenzbereich, im Beispiel dem Nah-Frequenzbereich, vorzunehmen. Hierzu ist es zweckmäßig, die Signalverarbeitung im Analog-Digital-Wandler (A/D-Wandler) zu verzögern. Die Verarbeitungsgeschwindigkeit von digitalen Signalprozessoren (DSP), insbesondere dann, wenn sie in speziellen ASICs ausgeführt sind, ist sehr hoch, so dass die entstehende Verzögerung bei der sequentiellen Verarbeitung und damit die verbleibende Latenz nur wenige Millisekunden beträgt. Auch bei der sequentiellen Auswertung ist es selbstverständlich möglich, die Auswertungsergebnisse einer gemeinsamen Weiterverarbeitung bzw. Auswertung zuzuführen, beispielsweise um eine Objektbestätigung durch Vergleich der jeweiligen Auswertungsergebnisse zu erhalten und/oder die Nachverfolgung von Objekten zu verbessern. In der so beschriebenen Ausgestaltung ist die Latenz nicht völlig eliminiert, aber deutlich reduziert, wobei es jedoch möglich ist, eine Verarbeitungseinheit, beispielsweise einen digitalen Signalprozessor, einzusparen.

Vorzugsweise kann als Antennenanordnung eine jeweils eine Teilantennenanordnung für den Nah-Frequenzbereich und den Fern-Frequenzbereich aufweisende und/oder wenigstens eine als Hornstrahler ausgebildete Antenne aufweisende Antennenanordnung verwendet werden. Je nachdem, ob beispielsweise bei einem bestimmten gewünschten Gesamt-Frequenzbereich eine vergrößerte Bandbreite für die Antennenanordnung benötigt wird, mithin wie stark die Entfernungsauflösung verbessert werden soll, kann vorgesehen sein, Antennenanordnungen bestehender Radar-sensoren zu modifizieren. Bekannt sind im Stand der Technik beispielsweise sogenannte Patchantennen-Spalten, die eine nutzbare Bandbreite von ca. 700 MHz bis maximal 1000 MHz aufweisen. Allgemein gilt hierbei allerdings der Grundsatz, dass je kleiner die relative Bandbreite ist, im Bespiel etwa 1 %, desto höher ist die Güte der Antennenanordnung, so dass im Umkehrschluss bei größerer relativer Bandbreite die Güte der Antennenanordnung sinkt.

Sollen die Antennenanordnungen breitbandiger ausgelegt werden, sinkt hierfür die Güte, um mehr nutzbare Bandbreite für eine gute Frequenztrennung zu erhalten. Eine alternative Ausgestaltung der vorliegenden Erfindung sieht jedoch vor, separate Teilantennenanordnungen für den Nah-Frequenzbereich und den Fern-Frequenzbereich vorzuhalten, nachdem diese schmalbandig mit einer hohen Güte ausgeführt sein können. Allerdings sind Radarsensoren bei einer Nutzung von Teilantennenanordnungen gegebenenfalls größer und aufwendiger auszulegen, so dass in anderen Fällen auch eine einzige Antennenanordnung für den Nah-Frequenzbereich und den Fern-Frequenzbereich sinnvoll sein kann.

Insgesamt bietet es sich an, eine Horn-Antennenstruktur einzusetzen, mithin eine als Hornstrahler ausgebildete Antenne in der Antennenanordnung einzusetzen. Eine Hornstrahler-Antenne zeichnet sich in ihrer Bauform dadurch aus, dass sie eine an die Form eines Exponentialtrichters angenäherte Metallfläche umfasst, die über einen Hohlleiter gespeist werden kann. Eine derartige, auch im Rahmen der vorliegenden Erfindung geeignete Hornstrahler-Antenne ist beispielsweise in der nachveröffentlichten Patentanmeldung DE 10 2016 007 434.5 offenbart. Die dort beschriebene Hornstrahler-Antenne weist eine große nutzbare Frequenzbandbreite von bis zu 30 GHz auf. Alternativ zu einer als Hornstrahler ausgebildeten Antenne können auch schlitzgekoppelte Patchantennen verwendet werden, um die Frequenzbandbreite der Antennenanordnung zu verbessern. Selbstverständlich können auch weitere, im Stand der Technik grundsätzlich bekannte Lösungsansätze herangezogen werden.

In einer Weiterbildung der vorliegenden Erfindung kann vorgesehen sein, dass wenigstens zwei Sendekanäle der Antennenanordnung verwendet werden, wobei zum Aussenden der Radarsignale unterschiedlicher Frequenzbereiche unterschiedliche Sendekanäle verwendet werden. Beispielsweise sind heutige hochintegrierte Radarsensoren bekannt, die drei separate Sendekanäle und vier unabhängige Empfangskanäle bereitstellen. Nutzt man eine breitbandige Antennenstruktur, beispielsweise wie soeben beschrieben, an den vier Empfangskanälen, kann beispielsweise ein gesamtes zulässiges Radarband von 76 bis 81 GHz erfasst werden. Die Erfindung ermöglicht es jedoch auch, Sendekanäle dem Nah-Frequenzbereich und dem Fern-Frequenzbereich jeweils zuzuordnen. So kann beispielsweise vorgesehen sein, einen Sendekanal zu einer Antenne mit hoher Güte für den Nah-Frequenzbereich zu nutzen, während zwei weitere Sendekanäle parallel mit wenigstens einer weiteren Antenne hoher Güte verbunden sind, so dass hierüber die Radarsignale des Fern-Frequenzbereichs ausgesendet werden können. Durch die Verwendung einer größeren Zahl von Sendekanälen für den Fern-Frequenzbereich wird eine höhere Leistung bereitgestellt, was einer großen Entfernungsüberbrückung und somit einer hohen Reichweite zu Gute kommt. Im Fall der Verwendung von zwei Sendekanälen für den Fern-Frequenzbereich und der Verwendung eines Sendekanals für den Nah-Frequenzbereich kann mithin eine doppelte Sendeleistung für den Fern-Frequenzbereich erreicht werden. Eine Teilantennenanordnung für den Fern-Frequenzbereich kann ferner so ausgestaltet sein, dass sie eine Hauptstrahlrichtung mit hoher Intensität auf den interessierenden Bereich in der Entfernung fokussiert, so dass beispielsweise Reichweiten von etwa 250 m problemlos ermöglicht werden können.

Auch insgesamt kann es zweckmäßig sein, wenn die Radarsignale des Fern-Frequenzbereichs mit einer höheren Sendeleistung als die Radarsignale des Nah-Frequenzbereichs ausgesendet werden, insbesondere durch Nutzung einer höheren Anzahl von Sendekanälen, und/oder dass die Radarsignale des Fern-Frequenzbereichs, insbesondere mittels einer zugeordneten Teilantennenanordnung, fokussiert ausgesendet werden. Entsprechende Sendetechniken sind im Stand der Technik bereits bekannt und müssen hier nicht genauer dargelegt werden, insbesondere auch was die Strahloptik angeht.

Wie bereits angedeutet wurde, sieht eine besonders bevorzugte Ausgestaltung der Erfindung vor, dass die Auswertungsergebnisse für den Nah-Frequenzbereich und den Fern-Frequenzbereich bei wenigstens teilweise überlappenden räumlichen Erfassungsbereichen gemeinsam weiter ausgewertet werden, insbesondere zur Ermittlung von Objektwahrscheinlichkeiten und/oder zum Nachverfolgen wenigstens eines durch die Auswertungsergebnisse beschriebenen, detektierten Objekts. Zumindest im überlappenden Reichweitenbereich und Öffnungswinkelbereich ist somit eine gegenseitige Plausibilisierung von detektierten Objekten und somit eine Objektbestätigung möglich; Vorteile bei der Nachverfolgung wurden bereits beschrieben, beispielsweise hinsichtlich von Kalman-Filtern.

Neben dem Verfahren betrifft die Erfindung auch einen Radarsensor für ein Kraftfahrzeug, aufweisend wenigstens eine Antennenanordnung zum Aussenden und Empfangen von Radarsignalen, eine Verarbeitungseinrichtung zum Auswerten empfangener Radarsignale und eine Steuereinrichtung, die zur Durchführung des erfindungsgemäßen Verfahrens ausgebildet ist. Sämtliche Ausführungen bezüglich des erfindungsgemäßen Verfahrens lassen sich analog auf den erfindungsgemäßen Radarsensor übertragen, mit welchem mithin ebenso die bereits genannten Vorteile erhalten werden können.

Die Erfindung betrifft schließlich auch ein Kraftfahrzeug, welches einen erfindungsgemäßen Radarsensor aufweist.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Radarsensors,
- Fig. 2: Erfassungsbereiche mit dem Radarsensor der Fig. 1,
- Fig. 3: Erfassungsbereiche bei einer alternativen Ausgestaltung mit Ausstrahlung in unterschiedliche Richtungen,
- Fig. 4: zeitliche Abläufe bei einem erfindungsgemäßen Radarsensor,
- Fig. 5: eine erste Ausgestaltung der Lage von Frequenzbändern,
- Fig. 6: eine zweite Ausgestaltung der Lage von Frequenzbändern, und
- Fig. 7: ein erfindungsgemäßes Kraftfahrzeug.

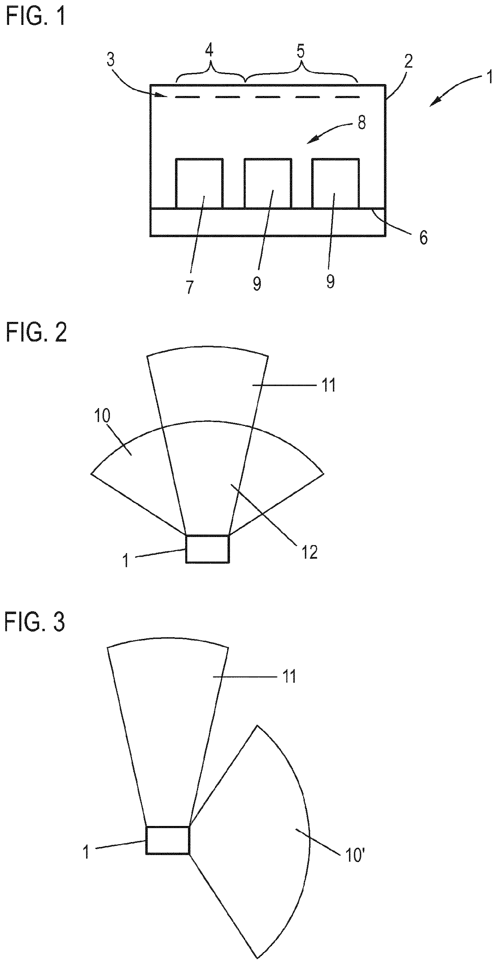

Fig. 1 zeigt eine Prinzipskizze eines erfindungsgemäßen Radarsensors 1. Der Radarsensor 1 weist zunächst eine in einem Gehäuse 2 angeordnete Antennenanordnung 3 auf, die optional, beispielsweise mittels einer Ansteuerung über unterschiedliche Sendekanäle, in Teilantennenanordnungen 4, 5 unterteilbar sein kann. Als Chips auf einer Leiterplatte 6 ausgebildet umfasst der Radarsensor 1 ferner eine Steuereinheit als Steuereinrichtung 7, die zur Durchführung des erfindungsgemäßen Verfahrens ausgebildet ist, und als Verarbeitungseinrichtung 8 wenigstens zwei digitale Signalprozessoren 9 (DSP).

Die Antennenanordnung 3 kann mehrere, als geschlitzte Patchantennen oder Hornstrahler ausgeführte Antennen aufweisen. Vorliegend wird die Teilantennenanordnung 4 über einen ersten von drei Sendekanälen angesteuert, die Teilantennenanordnung 5 über zwei der Sendekanäle. Die Teilantennenanordnungen 4, 5 sind dabei zur Realisierung verschiedener Erfassungsbereiche 10, 11, die in Fig. 2 näher dargestellt sind, ausgestaltet. Mittels der ersten Teilantennenanordnung 4 kann ein Nah-Erfassungsbereich 10 abgetastet werden, dessen Öffnungswinkel größer als der des Fern-Erfassungsbereichs 11 ist. Da nur ein Sendekanal verwendet wird, ist jedoch die Sendeleistung geringer, was sich auch in einer geringeren Reichweite zeigt. Für den Fern-Erfassungsbereich 11 liegt aufgrund der doppelten Sendeleistung eine größere Reichweite vor, wobei durch eine Fokussierung ein engerer Öffnungswinkel gegeben ist, um weiter entfernte Objekte verlässlich abtasten zu können. Ersichtlich weisen die Erfassungsbereiche 10, 11 einen Überlapp auf.

Im erfindungsgemäßen Verfahren und mithin auch im Radarsensor 1 ist es nun vorgesehen, unter gleichzeitiger Aussendung von Radarsignalen in einem Nah-Frequenzbereich und einem Fern-Frequenzbereich und entsprechend gleichzeitigem Empfang reflektierter Radarsignale beide Erfassungsbereiche 10, 11 gleichzeitig abzutasten und mithin einen Nahbereichs-Betriebsmodus und einen Fernbereichs-Betriebsmodus gleichzeitig zu realisieren. Empfangene Radarsignale können aufgrund der unterschiedlichen Frequenzbereiche unterschieden werden und werden vorliegend jeweils einer Verarbeitungseinheit, das bedeutet einem digitalen Signalprozessor 9, der Verarbeitungseinrichtung 8 zugeführt, wo sie zeitlich parallel ausgewertet werden, so dass keine zeitliche Latenz zwischen dem Vorliegen der Auswertungsergebnisse für den Nah-Erfassungsbereich 10 und den Fern-Erfassungsbereich 11 existiert. Dabei erfolgt die Auswertung hinsichtlich der Entfernung im Erfassungsbereich 11 mit einer gröberen Rasterung, beispielsweise einer Entfernungsauflösung von 30 cm, im Vergleich zur Rasterung im Nah-Erfassungsbereich 10, wo die Entfernungsauflösung beispielsweise 15 cm betragen kann, jedoch bei der schnellen Fourier-Transformation (FFT) jeweils dieselbe Zahl an Stützstellen verwendet wird. Die unterschiedlichen Entfernungsauflösungen resultieren daraus, dass vorliegend im Nah-Frequenzbereich eine Frequenzbandbreite von 500 MHz verwendet wird, im Fern-Frequenzbereich eine Frequenzbandbreite von 250 MHz.

Es sei noch angemerkt, dass es in alternativen Ausführungsbeispielen auch möglich ist, die empfangenen Radarsignale des Nah-Frequenzbereichs und die empfangenen Radarsignale des Fern-Frequenzbereichs sequentiell auszuwerten, beispielsweise, wenn nur eine Verarbeitungseinheit, also ein digitaler Signalprozessor 9, vorliegt.

Während im Ausführungsbeispiel der Fig. 2 die Radarsignale für den Nah-Frequenzbereich und die Radarsignale für den Fern-Frequenzbereich in derselben Richtung ausgesendet werden, ist dies nicht zwangsläufig notwendig, insbesondere mit unterschiedlich ausgerichteten Teilantennenanordnungen 4, 5, durch die die Radarsignale in unterschiedlichen Richtungen ausgesendet werden, beispielsweise, wie dargestellt, die Radarsignale des Nah-Frequenzbereichs seitlich, so dass sich der Erfassungsbereich 10' ergibt, der in diesem Fall nicht mit dem Erfassungsbereich 11 überlappt.

Im Fall überlappender Erfassungsbereiche 10, 11, wie in Fig. 2 dargestellt, können zumindest für den Überlappungsbereich 12 Auswertungsergebnisse des Nah-Frequenzbereichs und des Fern-Frequenzbereichs auch gemeinsam weiter ausgewertet werden, beispielsweise im Hinblick auf eine gegenseitige Plausibilisierung/Objektbestätigung zur Ermittlung von Objektwahrscheinlichkeiten und/oder im Rahmen einer Nachverfolgung von Objekten, insbesondere unter Verwendung von Kalman-Filtern, wobei angemerkt sei, dass der Stabilität und Verlässlichkeit von Nachverfolgungsalgorithmen auch die reduzierte Latenzzeit entgegenkommt.

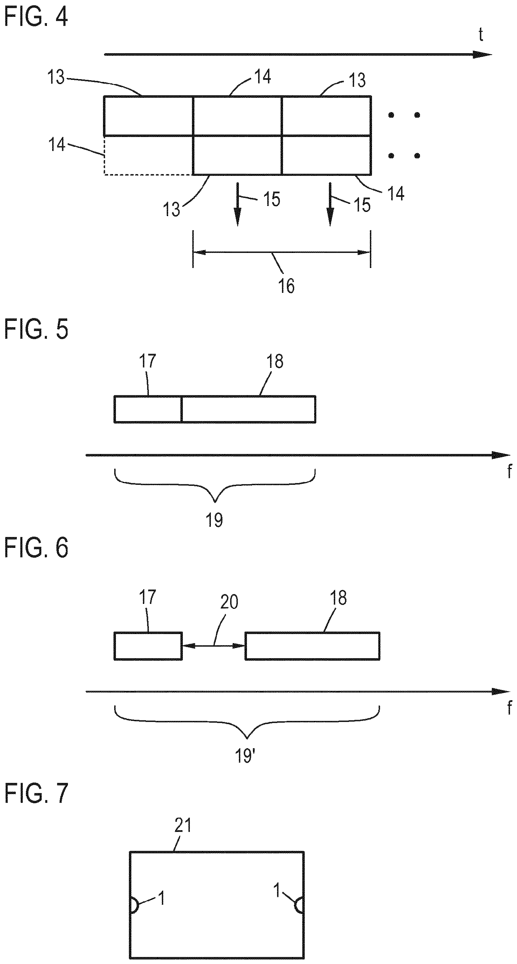

Fig. 4 erläutert den zeitlichen Ablauf der Vorgänge im Radarsensor genauer. Die zeitlichen Blöcke 13 sind dabei als Sende- und Empfangsblöcke zu verstehen, die vorliegend jeweils 50 ms dauern. Die Blöcke 14 sind hingegen als Auswertungsblöcke zu verstehen, in denen parallel zu einem Sende- und Empfangsblock 13 die Auswertung der zuletzt empfangenen Radarsignale stattfindet, und zwar - wie das Senden und Empfangen - zeitlich parallel für den Nah-Frequenzbereich und den Fern-Frequenzbereich. Wenn die Pfeile 15 die Ausgabe von Auswertungsergebnissen symbolisieren, liegen mithin alle 50 ms, Zeitspanne 16, sowohl Auswertungsergebnisse für den Nah-Frequenzbereich, also den Erfassungsbereich 10 bzw. 10', als auch Ergebnisse für den Fern-Frequenzbereich, also den Erfassungsbereich 11, vor.

Fig. 5 zeigt eine erste mögliche Ausgestaltung der Lage der Frequenzbereiche 17, 18 im Frequenzraum. In diesem Ausführungsbeispiel schließen der Fern-Frequenzbereich 17 bei niedrigeren Frequenzen und der Nah-Frequenzbereich 18 bei höheren Frequenzen unmittelbar aneinander an. Sie bilden mithin nahtlos einen Gesamt-Frequenzbereich 19, der mit den oben angegeben Bandbreiten eine Frequenzbandbreite von 750 MHz aufweist. Im Rahmen der vorliegenden Erfindung kann es nun zweckmäßig sein, wenn noch bessere Entfernungsauflösungen gewünscht sind, auch eine gemeinsame Auswertung der empfangenen Radarsignale beider Frequenzbereiche 17, 18, also bezüglich des Gesamt-Frequenzbereichs 19 mit seiner vergrößerten Frequenzbandbreite, vorzunehmen. Die Durchführung einer solchen Auswertung kann auf bestimmte Betriebsmodi beschränkt sein, in denen der Ultranahbereich relevant ist. Ferner sei angemerkt, dass selbstverständlich auch weitere Verarbeitungseinheiten der Verarbeitungseinrichtung 8 für solche zusätzlichen Auswertungsvorgänge vorgesehen werden können.

Eine alternative, bevorzugte Ausgestaltung mit getrennten Frequenzbereichen 17, 18 zeigt Fig. 6. Hier sind die Frequenzbereiche 17, 18 um einen Auslass-Frequenzbereich 20 von 250 MHz getrennt. Werden bei einer gemeinsamen Auswertung im auch den Auslass-Frequenzbereich 20 umfassenden Gesamt-Frequenzbereich 19' Signalpegel im Auslass-Frequenzbereich 20 auf Null gesetzt oder interpoliert, ergibt sich dennoch eine sinnvolle Auswertung mit einer vergrößerten Frequenzbandbreite des Gesamt-Frequenzbereichs 19' im Vergleich zum Gesamt-Frequenzbereich 19 von hier 1 GHz.

Es sei an dieser Stelle angemerkt, dass grundsätzlich auch Ausgestaltungen mit überlappenden Frequenzbereichen 17, 18 oder gar vollständig im Nah-Frequenzbereich 18 enthaltenem Fern-Frequenzbereich 17 denkbar sind.

Fig. 7 zeigt eine Prinzipskizze eines erfindungsgemäßen Kraftfahrzeugs 21, in dem vorliegend zwei Radarsensoren 1 verbaut sind, einer auf das Vorfeld des Kraftfahrzeugs 21 gerichtet, einer auf den Rückraum des Kraftfahrzeugs 21.

## Patentansprüche

1. Verfahren zum Betrieb eines Radarsensors (1) in einem Kraftfahrzeug (21), wobei der Radarsensor (1) wenigstens eine Antennenanordnung (3) zum Aussenden und Empfangen von Radarsignalen und eine Verarbeitungseinrichtung (8) zum Auswerten empfangener Radarsignale aufweist, wobei die Antennenanordnung (3) zum gleichzeitigen Aussenden und Empfangen von Radarsignalen sowohl in einem Fern-Frequenzbereich (17) als auch in einem Nah-Frequenzbereich (18), wobei die Bandbreite des Nah-Frequenzbereichs (18) größer ist als die des Fern-Frequenzbereichs (17), angesteuert wird, wobei ein räumlicher Erfassungsbereich (10, 10', 11) für die Frequenzbereiche (17, 18) teilweise überlappt und eine gemeinsame Auswertung empfangener Radarsignale für einen den Nah-Frequenzbereich (18) und den Fern-Frequenzbereich (17) vollständig umfassenden, zusammenhängenden Gesamt-Frequenzbereich (19, 19') erfolgt, wobei der Gesamt-Frequenzbereich (19, 19') größer als der Nah-Frequenzbereich (18) ist, wonach empfangene Radarsignale des Gesamt-Frequenzbereichs (19, 19') zu Radardaten einer höheren Entfernungsauflösung und empfangene Radarsignale des Fern-Frequenzbereichs (17) zu Radardaten einer niedrigeren Entfernungsauflösung ausgewertet werden.

2. Verfahren nach Anspruch 1,
**dadurch gekennzeichnet,**
**dass** bei der Auswertung der empfangenen Radarsignale beider Frequenzbereiche (17, 18) dieselbe Anzahl von Stützstellen bei einer schnellen Fouriertransformation verwendet wird und/oder die Bandbreite des Nah-Frequenzbereichs (18) wenigstens das doppelte der Bandbreite des Fern-Frequenzbereichs (17) beträgt.

3. Verfahren nach einem der vorangehenden Ansprüche,
**dadurch gekennzeichnet,**
**dass** bei einem zumindest bezüglich des Öffnungswinkels vollständig in dem räumlichen Erfassungsbereich (10, 10') des Nah-Frequenzbereichs (18) enthaltenen räumlichen Erfassungsbereich (11) des Fern-Frequenzbereichs (17) der Fern-Frequenzbereich (17) vollständig von dem den Gesamt-Frequenzbereich (19, 19') bildenden Nah-Frequenzbereich (18) umfasst ist.

4. Verfahren nach Anspruch 1 oder 2,
**dadurch gekennzeichnet,**
**dass** bei einem nicht durch Radarsignale abgedeckten Auslass-Frequenzbereich (20) zwischen dem Nah-Frequenzbereich (18) und dem Fern-Frequenzbereich (18) dortige Signalpegel für die Auswertung auf Null gesetzt werden oder eine Interpolation erfolgt.

5. Verfahren nach einem der vorangehenden Ansprüche,
**dadurch gekennzeichnet,**
**dass** die Radarsignale des Nah-Frequenzbereichs (18) und die Radarsignale des Fern-Frequenzbereichs (17) in unterschiedliche Richtungen ausgesendet werden.

6. Verfahren nach einem der vorangehenden Ansprüche,
**dadurch gekennzeichnet,**
**dass** die Auswertung der empfangenen Radarsignale im Fern-Frequenzbereich (17) und im Nah-Frequenzbereich (18) zeitlich parallel erfolgt.

7. Verfahren nach Anspruch 6,
**dadurch gekennzeichnet,**
**dass** ein wenigstens zwei jeweils einem Frequenzbereich (17. 18, 19, 19') zugeordnete Verarbeitungseinheiten, insbesondere digitale Signalprozessoren (9), der Verarbeitungseinrichtung (8) aufweisender Radarsensor (1) verwendet wird.

8. Verfahren nach einem der vorangehenden Ansprüche,
**dadurch gekennzeichnet,**
**dass** als Antennenanordnung (3) eine jeweils eine Teilantennenanordnung (4, 5) für den Nah-Frequenzbereich (18) und den Fern-Frequenzbereich (17) aufweisende und/oder wenigstens eine als Hornstrahler ausgebildete Antenne aufweisende Antennenanordnung (3) verwendet wird.

9. Verfahren nach einem der vorangehenden Ansprüche,
**dadurch gekennzeichnet,**
**dass** wenigstens zwei Sendekanäle der Antennenanordnung (3) verwendet werden, wobei zum Aussenden der Radarsignale unterschiedlicher Frequenzbereiche (17, 18) unterschiedliche Sendekanäle verwendet werden.

10. Verfahren nach einem der vorangehenden Ansprüche,
**dadurch gekennzeichnet,**
**dass** die Radarsignale des Fern-Frequenzbereichs (17) mit einer höheren Sendeleistung als die Radarsignale des Nah-Frequenzbereichs (18) ausgesendet werden, insbesondere durch Nutzung einer höheren Anzahl von Sendekanälen, und/oder dass die Radarsignale des Fern-Frequenzbereichs (17), insbesondere mittels einer zugeordneten Teilantennenanordnung (4, 5), fokussiert ausgesendet werden.

11. Verfahren nach einem der vorangehenden Ansprüche,
**dadurch gekennzeichnet,**
**dass** die Auswertungsergebnisse für den Nah-Frequenzbereich (18) und den Fern-Frequenzbereich (17) bei wenigstens teilweise überlappenden räumlichen Erfassungsbereichen (10, 10', 11) gemeinsam weiter ausgewertet werden, insbesondere zur Ermittlung von Objektwahrscheinlichkeiten und/oder zum Nachverfolgen wenigstens eines durch die Auswertungsergebnisse beschriebenen, detektierten Objekts.

12. Radarsensor (1) für ein Kraftfahrzeug (21), aufweisend wenigstens eine Antennenanordnung (3) zum Aussenden und Empfangen von Radarsignalen, eine Verarbeitungseinrichtung (8) zum Auswerten empfangener Radarsignale und eine Steuereinrichtung (7), ausgebildet zur Durchführung eines Verfahrens nach einem der vorangehenden Ansprüche.

13. Kraftfahrzeug (21), aufweisend wenigstens einen Radarsensor (1) nach Anspruch 12.

## Claims

1. Method for operating a radar sensor (1) in a motor vehicle (21), wherein the radar sensor (1) has at least one antenna arrangement (3) for emitting and receiving radar signals and a processing apparatus (8) for evaluating received radar signals, wherein the antenna arrangement (3) is controlled to simultaneously emit and receive radar signals both in a far frequency range (17) and a near frequency range (18), wherein the bandwidth of the near frequency range (18) is greater than that of the far frequency range (17), wherein a spatial detection range (10, 10', 11) for the frequency ranges (17, 18) partially overlaps and received radar signals are jointly evaluated for an overall frequency range (19, 19') that fully encompasses the near frequency range (18) and the far frequency range (17) and is continuous, wherein the overall frequency range (19, 19') is greater than the near frequency range (18), according to which received radar signals of the overall frequency range (19, 19') are evaluated as radar data of a higher distance resolution and received radar signals of the far frequency range (17) are evaluated as radar data of a lower distance resolution.

2. Method according to claim 1,
**characterised in that**
in the evaluation of the received radar signals of both frequency ranges (17, 18), the same number of nodes is used in a fast Fourier transform and/or the bandwidth of the near frequency range (18) is at least twice the bandwidth of the far frequency range (17).

3. Method according to any of the preceding claims,
**characterised in that**
in a spatial detection range (11) of the far frequency range (17) completely contained within the spatial detection range (10, 10') of the near frequency range (18), at least with respect to the opening angle, the far frequency range (17) is completely encompassed by the near frequency range (18) forming the overall frequency range (19, 19').

4. Method according to claim 1 or 2,
**characterised in that**
in the case of an output frequency range (20) not covered by radar signals between the near frequency range (18) and the far frequency range (18), signal levels therein are set to zero for the evaluation or an interpolation is performed.

5. Method according to any of the preceding claims,
**characterised in that**
the radar signals of the near frequency range (18) and the radar signals of the far frequency range (17) are emitted in different directions.

6. Method according to any of the preceding claims,
**characterised in that**
the received radar signals in the far frequency range (17) and in the near frequency range (18) are evaluated at the same time.

7. Method according to claim 6,
**characterised in that**
a radar sensor (1) having at least two processing units, in particular digital signal processors (9) of the processing apparatus (8) which are each assigned to a frequency range (17, 18, 19, 19'), is used.

8. Method according to any of the preceding claims,
**characterised in that**
an antenna arrangement (3) having in each case a first subantenna arrangement (4, 5) for the near frequency range (18) and the far frequency range (17) and/or at least one antenna formed as a horn antenna is used as the antenna arrangement (3).

9. Method according to any of the preceding claims,
**characterised in that**
at least two transmission channels of the antenna arrangement (3) are used, wherein different transmission channels are used to emit the radar signals of different frequency ranges (17, 18).

10. Method according to any of the preceding claims,
**characterised in that**
the radar signals of the far frequency range (17) are emitted at a higher transmission power than the radar signals of the near frequency range (18), in particular by using a higher number of transmission channels, and/or **in that** the radar signals of the far frequency range (17) are emitted in a focused manner, in particular by means of an assigned subantenna arrangement (4, 5).

11. Method according to any of the preceding claims,
**characterised in that**
the evaluation results for the near frequency range (18) and the far frequency range (17) are jointly evaluated further in the case of at least partially overlapping spatial detection ranges (10, 10', 11), in particular to determine object probabilities and/or to track at least one detected object described by the evaluation results.

12. Radar sensor (1) for a motor vehicle (21), having at least one antenna arrangement (3) for emitting and receiving radar signals, a processing apparatus (8) for evaluating received radar signals and a control apparatus (7), said radar sensor being configured to perform a method according to any of the preceding claims.

13. Motor vehicle (21) having at least one radar sensor (1) according to claim 12.

## Revendications

1. Procédé pour faire fonctionner un capteur radar (1) dans un véhicule automobile (21), dans lequel le capteur radar (1) présente au moins un ensemble d'antennes (3) pour émettre et recevoir des signaux radar et un dispositif de traitement (8) pour évaluer des signaux radar reçus, dans lequel l'ensemble d'antennes (3) est commandé pour une émission et une réception simultanées de signaux radar à la fois dans une plage de fréquences éloignée (17) et dans une plage de fréquences proche (18), dans lequel la largeur de bande de la plage de fréquences proche (18) est supérieure à celle de la plage de fréquences éloignée (17), dans lequel une plage de détection spatiale (10, 10', 11) chevauche partiellement les plages de fréquences (17, 18) et une évaluation conjointe survient, de signaux radar reçus pour une plage de fréquences globale (19, 19') cohérente, comprenant entièrement la plage de fréquences proche (18) et la plage de fréquences éloignée (17), dans lequel la plage de fréquences globale (19, 19') est supérieure à la plage de fréquences proche (18), après quoi des signaux radar reçus de la plage de fréquences globale (19, 19') sont analysés par rapport à des données radar avec une résolution d'éloignement plus élevée et des signaux radar reçus de la plage de fréquences éloignée (17) sont analysés par rapport à des données radar avec une résolution d'éloignement inférieure.

2. Procédé selon la revendication 1,
**caractérisé en ce que**,
lors de l'analyse des signaux radar reçus des deux plages de fréquences (17, 18), le même nombre de points d'appui est utilisé dans une transformation de Fourier rapide et/ou la largeur de bande de la plage de fréquences proche (18) est au moins le double de la largeur de bande de la plage de fréquences éloignée (17).

3. Procédé selon l'une quelconque des revendications précédentes,
**caractérisé en ce que**,
dans une plage de détection spatiale (11) de la plage de fréquences éloignée (17) contenue au moins en se référant à l'angle d'ouverture complètement dans la plage de détection spatiale (10, 10') de la plage de fréquences proche (18), la plage de fréquences éloignée (17) est complètement comprise dans la plage de fréquences proche (18) formant la plage de fréquences globale (19, 19').

4. Procédé selon la revendication 1 ou 2,
**caractérisé en ce que**,
dans une plage de fréquence de sortie (20) entre la plage de fréquences proche (18) et la plage de fréquences éloignée (18) qui n'est pas couverte par des signaux radar, des niveaux de signal y sont mis à zéro pour l'analyse ou une interpolation survient.

5. Procédé selon l'une quelconque des revendications précédentes,
**caractérisé en ce que**
les signaux radar de la plage de fréquences proche (18) et les signaux radar de la plage de fréquences éloignée (17) sont émis dans des directions différentes.

6. Procédé selon l'une quelconque des revendications précédentes,
**caractérisé en ce que**
les analyses des signaux radar reçus dans la plage de fréquences éloignée (17) et dans la plage de fréquences proche (18) surviennent en même temps.

7. Procédé selon la revendication 6,
**caractérisé en ce que**
un capteur radar (1) présentant le dispositif de traitement (8) est utilisé avec au moins deux unités de traitement associées respectivement à une plage de fréquences (17, 18, 19, 19'), en particulier des processeurs de signaux numériques (9).

8. Procédé selon l'une quelconque des revendications précédentes,
**caractérisé en ce que**
un ensemble d'antennes (3) présentant respectivement un ensemble d'antennes partiel (4, 5) pour la plage de fréquences proche (18) et la plage de fréquences éloignée (17) et/ou présentant au moins une antenne conçue comme antenne cornet est utilisé comme ensemble d'antennes (3).

9. Procédé selon l'une quelconque des revendications précédentes,
**caractérisé en ce que**
au moins deux canaux d'émission de l'ensemble d'antennes (3) sont utilisés, dans lequel pour une émission des signaux radar, différents canaux de transmission de différentes plages de fréquences (17, 18) sont utilisés.

10. Procédé selon l'une quelconque des revendications précédentes,
**caractérisé en ce que**
les signaux radar de la plage de fréquences éloignée (17) sont émis avec une puissance d'émission plus élevée que les signaux radar de la plage de fréquences proche (18), en particulier en utilisant un nombre plus élevé de canaux d'émission, et/ou **en ce que** les signaux radar de la plage de fréquences éloignée (17) sont émis de manière focalisée, en particulier au moyen d'un ensemble d'antennes partiel associé (4, 5).

11. Procédé selon l'une quelconque des revendications précédentes,
**caractérisé en ce que**
les résultats d'analyse pour la plage de fréquences proche (18) et la plage de fréquences éloignée (17) sont en outre conjointement analysés plus en détail avec des plages de détection spatiales (10, 10', 11) se chevauchant au moins partiellement, en particulier pour déterminer des probabilités d'objet et/ou pour suivre au moins un objet détecté décrit par les résultats d'analyse.

12. Capteur radar (1) pour un véhicule automobile (21), présentant au moins un ensemble d'antennes (3) pour émettre et recevoir des signaux radar, un dispositif de traitement (8) pour analyser les signaux radar reçus et un dispositif de commande (7), conçu pour effectuer un procédé selon l'une quelconque des revendications précédentes.

13. Véhicule automobile (21) comportant au moins un capteur radar (1) selon la revendication 12.
